# DEMANDE DE BREVET EUROPEEN

(11) **EP 1 447 777 A1**
(43) Date de publication de la demande: **18.08.2004**
(21) Numéro de dépôt: 04290254.4
(22) Date de dépôt: 30.01.2004
(51) Int. Cl.: G07F 7/10, G06F 1/00

(54) **Procede et dispositif de securisation de transactions electroniques effectuees sur un terminal non securise**

(30) Priorité: 31.01.2003 FR 0301133
(71) Demandeur: FRANCE TELECOM, 75015 Paris (FR)
(72) Inventeur: Remery, Patrick, 14000 Caen (FR); De Solages, Aymeric, 14000 Caen (FR)
(74) Mandataire: de Roquemaurel, Bruno

(57) **Abrégé**

Pour sécuriser des transactions électroniques effectuées au moyen d'un terminal (1, 9), le dispositif de sécurisation (10, 29) comprend des moyens pour se connecter à l'unité de traitement du terminal, des moyens pour se connecter aux organes périphériques (2 à 6, 31, 32) du terminal, afin d'intercepter tous les signaux transmis entre l'unité de traitement (1a, 9a) et les organes périphériques auxquels le dispositif de sécurisation est connecté, des moyens pour fonctionner soit en transparent, soit en mode sécurisé, des moyens pour retransmettre sans modification les signaux interceptés en mode transparent, des moyens pour afficher en mode sécurisé des informations d'une manière non modifiable, et des moyens pour chiffrer en mode sécurisé des informations confidentielles provenant des organes périphériques auxquels le dispositif de sécurisation est connecté.

## Description

La présente invention concerne un procédé et un système de sécurisation de transactions électroniques.

Elle s'applique notamment, mais non exclusivement, au commerce électronique effectué depuis un terminal connecté à un réseau public de télécommunication ou de transmission de données numériques, tel que le réseau Internet. Elle s'applique plus généralement à l'échange sécurisé de données par l'intermédiaire d'un réseau public de transmission de données.

D'une manière générale, une transaction électronique s'effectue à travers un réseau public entre un vendeur équipé d'un serveur connecté au réseau et un client muni d'un terminal comportant des moyens de navigation et de paiement électronique conçus pour établir une liaison avec le serveur du vendeur par l'intermédiaire du réseau public et pour effectuer une transaction de paiement auprès du vendeur. Le plus souvent, le terminal est constitué par un ordinateur, par exemple du type PC, connecté à un lecteur de carte à puce assurant 1a fonction de paiement électronique. Un gestionnaire de télépaiement connecté par le réseau au serveur du vendeur permet de procéder à toutes les vérifications nécessaires à ce type d'opération.

Dès lors qu'une telle transaction s'effectue par l'intermédiaire d'un réseau public, il est nécessaire de mettre en place des moyens de sécurisation permettant d'éviter toute interception ou modification des messages échangés entre le vendeur, le client et le gestionnaire de télépaiement. Ainsi par exemple, il ne doit pas être possible de modifier le montant de la transaction affiché à l'écran du client ou de simuler une transaction dans le but d'intercepter le code secret de l'utilisateur ou son numéro de carte bancaire.

La norme CWA 14174 FINREAD (Financial Transactional IC Card Reader) spécifie un lecteur de carte à puce sécurisé, destiné à être connecté à un ordinateur de type PC, pour sécuriser l'interface utilisateur, notamment en ce qui concerne l'affichage d'un montant à payer ou 1a saisie d'un code confidentiel au clavier. Les logiciels chargés dans le lecteur sont téléchargés par une procédure sécurisée utilisant un schéma de certification basé sur des algorithmes cryptographiques à clé publique, et sont préalablement certifiés par une autorité garantissant leur sécurité.

Pour sécuriser l'affichage, en particulier du montant à payer et la saisie au clavier de codes secrets, le lecteur est connecté à un clavier et un afficheur spécifiques, ce qui contraint l'utilisateur à actionner ce clavier et à surveiller cet écran, en plus de ceux de son ordinateur. Cette solution est donc peu ergonomique et donc peut entraîner des erreurs de la part de l'utilisateur qui peut introduire un code confidentiel au moyen du clavier non protégé de son ordinateur au lieu d'utiliser à cet effet le clavier spécifique connecté au lecteur.

La présente invention a pour but de supprimer ces inconvénients. Cet objectif est atteint par la prévision d'un dispositif de sécurisation de transactions électroniques effectuées au moyen d'un terminal comprenant une unité de traitement et des organes périphériques d'affichage, d'introduction d'informations, et de transmission pour accéder à un serveur par l'intermédiaire d'un réseau public de transmission de données, le dispositif de sécurisation comprenant des moyens de connexion pour se connecter à l'unité de traitement du terminal.

Selon l'invention, ce dispositif comprend :
- des moyens pour se connecter à au moins une partie des organes périphériques, de manière à intercepter tous les signaux transmis entre l'unité de traitement du terminal et les organes périphériques auxquels le dispositif de sécurisation est connecté,
- des moyens pour fonctionner soit dans un mode transparent, soit dans un mode sécurisé,
- des moyens pour retransmettre sans modification les signaux interceptés en mode transparent,
- des moyens pour afficher en mode sécurisé des informations d'une manière non modifiable, et
- des moyens pour chiffrer en mode sécurisé des informations confidentielles provenant des organes périphériques auxquels le dispositif de sécurisation est connecté.

Selon un mode de réalisation préféré de l'invention, les organes périphériques auxquels le dispositif de sécurisation est connecté comprennent au moins un organe de commande, le dispositif de sécurisation comprenant des moyens pour analyser en mode transparent les signaux interceptés, provenant de l'organe de commande auquel le dispositif de sécurisation est connecté, pour y rechercher des ordres de passage en mode sécurisé, et pour retransmettre ces signaux à l'unité de traitement sans modification s'ils ne sont pas un ordre de passage en mode sécurisé.

Avantageusement, ce dispositif comprend un organe d'affichage spécifique pour afficher des informations confidentielles d'une manière non modifiable.

Alternativement, les organes périphériques auxquels le dispositif de sécurisation est connecté comprennent au moins un organe d'affichage, le dispositif de sécurisation comprenant des moyens pour insérer en mode sécurisé dans les signaux interceptés, destinés à l'organe d'affichage, des signaux d'affichage d'une fenêtre d'affichage sécurisé dans laquelle sont présentées d'une manière non modifiable des informations comprenant des informations provenant des organes de commande et/ou du réseau, et pour retransmettre ces signaux à l'organe d'affichage,

De préférence, ce dispositif comprend un organe de commande spécifique pour introduire des informations confidentielles.

Avantageusement, la fenêtre d'affichage sécurisé présente des dimensions et une position fixes sur l'écran d'affichage.

Selon un mode de réalisation préféré de l'invention, ce dispositif comprend des moyens pour afficher dans la fenêtre d'affichage sécurisé, lors de son affichage, un message d'invitation de l'utilisateur à introduire un ordre de passage en mode sécurisé.

Selon un mode de réalisation préféré de l'invention, ce dispositif comprend des moyens pour se connecter entre le terminal et le réseau, des moyens pour déchiffrer en mode sécurisé des informations confidentielles reçues du réseau, et des moyens pour afficher les informations confidentielles déchiffrées dans la fenêtre d'affichage sécurisé.

Selon un mode de réalisation préféré de l'invention, ce dispositif comprend des moyens de téléchargement pour recevoir d'une manière sécurisée un logiciel.

Selon un mode de réalisation préféré de l'invention, ce dispositif comprend des moyens de lecture d'une carte à puce dans laquelle sont stockées des informations confidentielles et des clés de chiffrement et de déchiffrement.

Avantageusement, ce dispositif comprend des moyens pour passer en mode sécurisé lorsqu'une carte à puce est détectée par les moyens de lecture.

Selon un mode de réalisation préféré de l'invention, ce dispositif comprend des moyens pour passer en mode sécurisé à la suite de l'actionnement d'une touche particulière d'un organe de commande auquel il est connecté.

Selon un mode de réalisation préféré de l'invention, ce dispositif comprend un bouton de commande pour commander manuellement le passage en mode sécurisé.

Selon un mode de réalisation préféré de l'invention, ce dispositif comprend un voyant pour indiquer à l'utilisateur s'il se trouve en mode sécurisé ou transparent.

Selon un mode de réalisation préféré de l'invention, ce dispositif comprend un logiciel intégré dans une puce électronique insérée dans le terminal de type terminal mobile, le logiciel comportant des moyens pour recevoir tous les signaux provenant d'organes de commande du terminal, et tous les signaux destinés à l'écran d'affichage, et des moyens pour fonctionner soit dans le mode transparent, soit dans le mode sécurisé.

Avantageusement, la puce électronique est constituée par la carte SIM du terminal mobile.

De préférence, ce dispositif comprend un logiciel installé dans le terminal, conçu pour adapter le système d'exploitation du terminal pour faire transiter par la puce électronique tous les flux de données entrants dans le terminal, provenant soit d'un réseau mobile, soit des organes de commande du terminal, et tous les flux sortants du terminal soit vers l'écran d'affichage, soit vers le réseau mobile.

Selon un mode de réalisation préféré de l'invention, ce dispositif comprend en outre des moyens pour recevoir un logiciel certifié, pour vérifier l'intégrité de ce logiciel et pour l'exécuter à la demande du terminal ou de l'utilisateur par l'intermédiaire d'un organe de commande.

Avantageusement, ce dispositif comprend des moyens pour transmettre en mode sécurisé les signaux interceptés, provenant de l'organe de commande, au logiciel en cours d'exécution.

Selon un mode de réalisation préféré de l'invention, ce dispositif comprend des moyens pour afficher en mode sécurisé à l'écran d'affichage un logo présentant deux formes indiquant si oui ou non l'utilisateur a lui-même activé le mode sécurisé.

Un mode de réalisation préféré de l'invention sera décrit ci-après, à titre d'exemple non limitatif, avec référence aux dessins annexés dans lesquels :
La figure 1 représente schématiquement un dispositif de sécurisation selon l'invention connecté à un terminal raccordé à un réseau de transmission de données ;
La figure 2 représente schématiquement une variante du dispositif de sécurisation montré sur la figure 1 ;
La figure 3 montre plus en détail le dispositif de sécurisation représenté sur la figure 1 ;
Les figures 4 et 5 représentent deux autres variantes du dispositif de sécurisation montré sur la figure 1 ;
La figure 6 représente schématiquement un autre terminal connecté à un dispositif de sécurisation conformément à un autre mode de réalisation de l'invention ;
La figure 7 montre plus en détail le terminal et le dispositif de sécurisation représenté sur la figure 6.

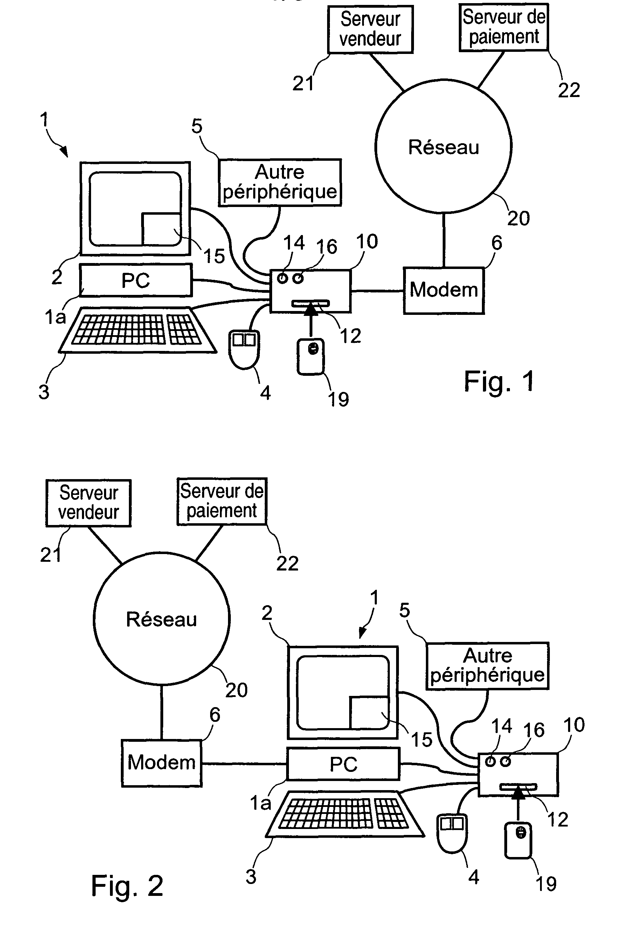

Les figures 1 et 2 représentent un terminal 1 du type ordinateur personnel, comprenant d'une manière classique une unité centrale 1a connectée à des organes périphériques comportant un écran d'affichage 2, des organes de commande tels qu'un clavier 3 et une souris 4, et d'autres organes périphériques schématisés par le bloc 5, tels que des lecteurs et/ou graveurs de disques optiques, et une imprimante.

L'unité centrale la est également connectée à un modem 6 pour pouvoir accéder à un réseau 20 public de transmission de données, tel que le réseau Internet 20, et ainsi effectuer des achats en ligne auprès de serveurs vendeurs 21 et de serveurs de télépaiement 22.

Selon l'invention, un module de sécurité 10 est interposé entre l'unité centrale 1a et au moins l'écran 2 et le clavier 3, et de préférence les autres organes périphériques 4 à 6, pour sécuriser l'interface de l'ordinateur avec l'utilisateur, comme l'affichage d'un montant à payer ou la saisie d'un code confidentiel au clavier. Le module de sécurité 10 est vu par l'unité centrale 1a comme un organe périphérique qui échange des données avec celle-ci.

Sur la figure 1, le module de sécurité 10 est interposé sur la liaison entre le modem 6 et l'unité centrale 1a, tandis que sur la figure 2, l'unité centrale est connectée directement au modem.

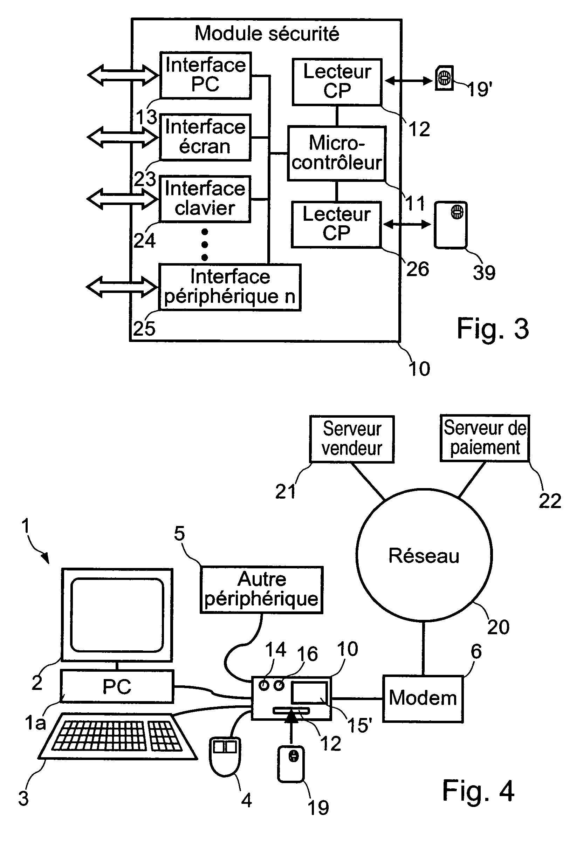

Sur la figure 3, le module de sécurité 10 comprend un microcontrôleur 11 connecté à un circuit d'interface 13 avec l'unité centrale la, à un circuit d'interface 12 avec une carte à puce 19 permettant d'identifier l'utilisateur et/ou constituant un moyen de paiement comme une carte bancaire, ainsi qu'à un circuit d'interface 23 à 25 avec chacun des organes périphériques 2 à 6 raccordés à l'unité centrale la. Le circuit d'interface 12 avec une carte à puce peut également être disposé dans un boîtier externe de lecteur de carte à puce. Dans ce cas, le module de sécurité comprend des moyens pour se connecter à un tel lecteur.

Le module de sécurité présente deux modes de fonctionnement, à savoir un mode transparent et un mode sécurisé.

Dans le mode transparent, le module 10 retransmet simplement les données échangées entre l'unité centrale et les organes périphériques, sans y effectuer de traitement, mais en y recherchant un éventuel ordre d'activation du mode sécurisé provenant des organes périphériques entrants, tels que le clavier 3, la souris 4, le modem 6 ou d'autres organes périphériques entrants 5.

Dans le mode sécurisé, le module 10 réserve sur l'écran d'affichage 2 une zone d'affichage sécurisée 15, par exemple sous la forme d'une fenêtre d'écran, qui est avantageusement de dimensions et d'emplacement fixes sur l'écran, en surchargeant à la volée les trames provenant de l'unité centrale et envoyées à l'écran d'affichage 2. L'utilisateur qui connaît l'emplacement et la taille de la fenêtre d'affichage sécurisée, ainsi que le mode dans lequel se trouve le module de sécurité 10, peut ainsi être assuré que les informations affichées dans la zone sécurisée sont de provenance sûre du fait qu'elles sont contrôlées par le module de sécurité. Des repères délimitant la zone et une icone signalant que le module 10 est en mode sécurisé, peuvent également être affichées pour en faciliter la reconnaissance.

Préalablement à une transaction ou à la génération d'une signature électronique, un logiciel certifié par une autorité habilitée est téléchargé dans le module de sécurité, soit à partir de l'unité centrale la, soit à partir d'un organe périphérique 5 tel qu'un lecteur de disque optique ou le modem 6. La procédure de téléchargement mise en oeuvre est basée sur des techniques cryptographiques appropriées telles que PKI (Public Key Infrastructure).

Le module 10 passe en mode sécurisé soit à la suite de l'exécution du logiciel chargé dans le module, soit après avoir détecté un ordre d'activation dans les données entrantes provenant d'une saisie au clavier ou d'un autre périphérique disposant d'une voie d'entrée telle que le modem 6. De cette manière, l'utilisateur peut à tout moment activer le mode sécurisé, en particulier dans le but de déceler une fraude, telle qu'une page d'écran transmise par l'unité centrale 1a, imitant la zone d'affichage sécurisée 15. On peut également prévoir sur le boîtier du module de sécurité 10 un bouton 14 d'activation du mode sécurisé et/ou un voyant 16 qui est par exemple allumé lorsque le module est en mode sécurisé. Alternativement, on peut prévoir que le module de sécurité affiche à l'écran en mode sécurisé un logo différent montrant si oui ou non le mode sécurisé a été activé à la suite d'une commande manuelle par appui sur une touche particulière du clavier 3 ou du bouton d'activation 14, ou encore à la suite de l'insertion d'une carte à puce 19. Ce logo peut par exemple représenter un cadenas qui est ouvert en mode sécurisé si l'utilisateur n'a pas lui-même activé le mode sécurisé, par exemple en appuyant sur une touche, et un cadenas fermé seulement lorsqu'il a lui-même activé le mode sécurisé. Cette icone permet donc à l'utilisateur de vérifier que la commande manuelle d'activation du mode sécurisé a bien été prise en compte par le module de sécurité, la liaison entre le clavier et l'écran pouvant être perturbée.

En outre, lorsque la fenêtre d'affichage sécurisé 15 apparaît à l'écran, on peut prévoir que le module de sécurité y affiche un message approprié, invitant l'utilisateur à introduire au clavier un ordre de passage en mode sécurisé. Si le terminal et le module de sécurité ne fonctionnent pas en mode sécurisé, les informations affichées dans la fenêtre 15 sont effacées et remplacées par une vraie fenêtre d'affichage sécurisée. De plus, si le message approprié n'apparaît pas, cela signifie que le mode sécurisé du terminal n'est pas activé et qu'il s'agit d'une fausse fenêtre sécurisée.

Le message approprié peut par exemple inviter l'utilisateur à actionner une touche déterminée du clavier pour vérifier que le mode sécurisé est activé.

Le dispositif qui vient d'être décrit permet par exemple de générer une signature électronique ou d'effectuer une transaction de paiement électronique. A cet effet, le logiciel installé dans le module 10 est dédié à la vente en ligne, et l'ordinateur est connecté via le modem 6 et le réseau 20 à un serveur de vente en ligne. Après acceptation par l'utilisateur d'une offre de vente, le logiciel installé dans le module de sécurité 10 est activé par l'unité centrale la qui lui communique les informations nécessaires à la bonne exécution de la transaction, comme le montant de la transaction de paiement, l'identité du vendeur et les données d'authentification de l'offre du vendeur. Le module de sécurité 10 passe alors en mode sécurisé, et affiche à l'écran 2 la fenêtre sécurisée 15 dans laquelle sont affichés le montant de la transaction et une invitation de l'utilisateur à saisir un code confidentiel pour valider le paiement. L'utilisateur peut au préalable introduire la commande manuelle d'activation du mode sécurisé, par exemple à l'aide du clavier 3, pour s'assurer que le module 10 est bien en mode sécurisé. Les codes secrets introduits par l'utilisateur en mode sécurisé sont chiffrés par le module de sécurité, par exemple à l'aide de clés mémorisées dans la carte à puce 19 avant d'être retransmis à l'unité centrale 1a qui les envoie au serveur de paiement 22 via le réseau public 20.

Si le module 10 est en mode sécurisé, les informations affichées ne sont donc pas modifiables et l'utilisateur peut introduire son code confidentiel en toute confiance, car celui-ci ne transite pas en clair par le réseau public du fait qu'il est chiffré par le logiciel certifié, installé dans le module de sécurité 10.

Grâce à ces dispositions, la sécurité du terminal est gérée par le module de sécurité qui comporte sa propre unité de traitement, et ce d'une manière indépendante de l'unité centrale la du terminal. En outre, l'utilisateur peut vérifier à tout moment que les données sensibles affichées dans la fenêtre de sécurité 15 sont bien traitées par le module de sécurité selon l'invention.

Les informations affichées dans la fenêtre sécurisée 15 peuvent être des informations confidentielles provenant du réseau public 20 et avoir été préalablement chiffrées. Dans ce cas, le logiciel peut être conçu pour déchiffrer ces informations par exemple en utilisant des clés mémorisées dans la carte à puce 19, avant de les introduire dans la fenêtre sécurisée. Ces informations peuvent être un code confidentiel introduit par l'utilisateur. Dans ce cas, le module de sécurité remplace chaque caractère du code confidentiel par exemple par un astérisque avant de l'introduire dans la fenêtre sécurisée.

Le module de sécurité est également conçu pour chiffrer les informations confidentielles introduites par l'utilisateur à l'aide du clavier ou d'un autre organe périphérique, notamment en vue de transmettre ces informations vers le réseau public.

Comme représenté sur la figure 3, le module de sécurité 10 peut comprendre un second lecteur 26 de carte à puce associé à une fente d'introduction d'une carte à puce 39 accessible de l'extérieur du module de sécurité. Ce second lecteur est par exemple destiné à recevoir des cartes de signature électronique ou de paiement électronique, telles que des cartes bancaires ou de porte-monnaie électronique. Dans ce cas, le premier lecteur 12 peut être conçu pour recevoir une carte à puce 19', à demeure, par exemple au format SIM ID000 remplissant les fonctions de sécurité, tandis que le second lecteur 26 avec fente accessible de l'extérieur peut être conçu pour recevoir des cartes à puce au format ISO ID1 pour par exemple générer des signatures électroniques ou effectuer des paiements électroniques.

La figure 4 représente une autre variante du dispositif représenté sur les figures 1 à 3. Dans cette variante, le module de sécurité 10 comporte son propre afficheur 15' et les informations qui étaient affichées dans la fenêtre sécurisée 15 dans le mode de réalisation représenté sur la figure 1 ou 2 sont présentées sur l'afficheur 15'. Dans ce cas, l'écran d'affichage 2 du terminal 1 est connecté directement à l'unité centrale la.

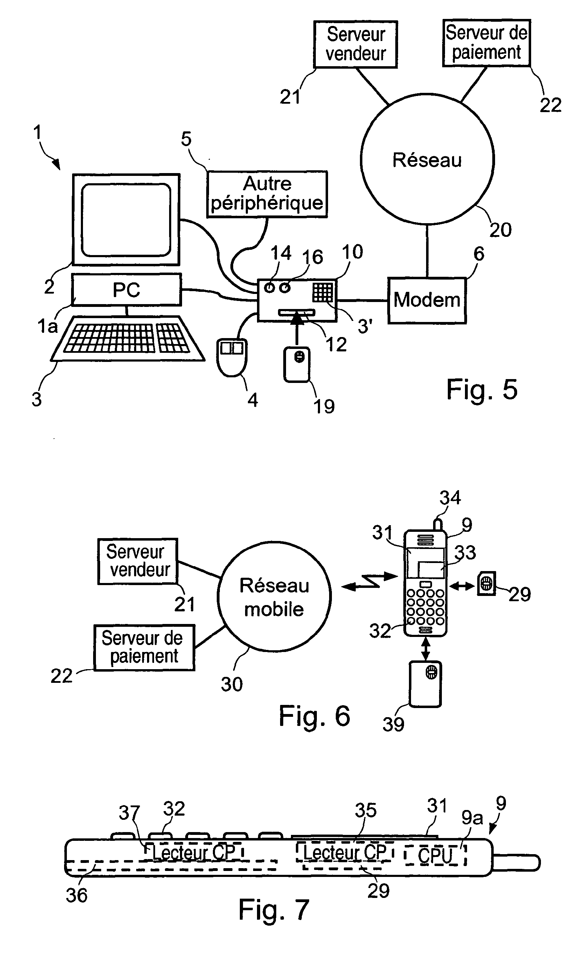

La figure 5 montre encore une autre variante de l'invention. Sur cette figure, le module de sécurité 10 comporte son propre clavier 3' qui est destiné à être utilisé pour la saisie d'informations confidentielles comme des codes d'authentification. Dans cette variante, le clavier 3 du terminal est connecté directement à l'unité centrale 1a du terminal 1, et la commutation entre le mode transparent et le mode sécurisé est effectuée à l'aide d'une touche spécifique du clavier 3' ou d'un bouton de commande 14.

Les figures 6 et 7 illustrent le cas où le terminal 9 qui accède aux serveurs vendeur 21 et de paiement 22 est de type mobile, tel qu'un téléphone mobile, par exemple de type GSM (Global System for Mobile Communications) ou UMTS (Universal Mobile Télécommunication System), ou encore un assistant personnel muni d'une unité de communication mobile.

Sur ces figures, le terminal 9 comprend d'une manière classique, notamment une unité centrale 9a, un écran d'affichage 31, un clavier de commande 32, un lecteur 35 de carte à puce SIM (Subscriber Identification Module) d'identification d'abonné que l'on trouve dans ce type de terminal, et une antenne 34 d'émission / réception. Le dispositif de sécurisation selon l'invention fait intervenir une carte à puce 29, qui peut être celle de la carte SIM. Plus précisément le module de sécurité comprend un logiciel qui est installé dans cette carte à puce, ainsi qu'un logiciel installé dans le terminal et conçu pour adapter le système d'exploitation du terminal 9 pour faire transiter par la carte à puce 29 tous les flux de données entrants dans le terminal, provenant soit d'un réseau mobile 30, soit du clavier 32, et tous les flux sortants du terminal soit vers l'écran d'affichage 31, soit vers le réseau mobile 30, la carte à puce 29 fonctionnant soit dans le mode transparent, soit dans le mode sécurisé, tels que décrits ci-avant. Les connexions physiques de l'unité centrale 1a du terminal 1 avec ses organes périphériques 2 à 6, décrites en référence aux figures 1 à 5 sont donc remplacées dans le cas des figures 6 et 7 par des connexions logiques.

L'écran 31 du terminal 9 est également géré par la carte à puce 29 pour afficher une fenêtre sécurisée 33 lorsque le terminal passe en mode sécurisé.

Sur le plan logiciel, les programmes chargés dans le module de sécurité 10 ou dans la puce 29 sont organisés sous la forme d'un noyau logiciel et de logiciels applicatifs. Le noyau logiciel est conçu pour gérer tous les échanges avec le terminal (unité centrale 1a ou terminal mobile 9), et gérer les téléchargements de logiciels applicatifs et de nouvelles versions du noyau logiciel. Le téléchargement et l'installation de nouveaux logiciels dans la mémoire du module de sécurité 10 ou de la carte à puce 29 ne sont effectués qu'après authentification de ces logiciels.

Bien entendu, au moins une partie des fonctions de sécurité du module de sécurité 10 peut être réalisée par un logiciel chargé dans la carte à puce 19 ou 19' .

Le noyau logiciel est par exemple conçu sous la forme d'APIs (Application Program Interface) avec lesquelles les logiciels applicatifs communiquent.

Le noyau logiciel est également conçu pour gérer les échanges de données entre le terminal 1 ou 9 et la mémoire de la carte à puce 29, notamment pour y enregistrer de nouvelles clés d'authentification.

En outre, le terminal 9 peut avantageusement comprendre un autre lecteur de carte à puce 37 comportant une fente d'introduction 36 conçue pour recevoir des cartes à puce 39 par exemple au format ISO ID1, telles que des cartes bancaires ou de porte-monnaie électronique.

Par ailleurs, que le terminal soit un poste fixe 1 (figures 1 à 5) ou un terminal mobile 9 (figures 6 et 7), le module de sécurité est conçu pour détecter l'introduction d'une carte à puce 19, 39 dans le lecteur 12, 26 ou 37 et pour passer en mode sécurisé à la suite d'une telle détection.

## Revendications

1. Dispositif de sécurisation de transactions électroniques effectuées au moyen d'un terminal (1, 9) comprenant une unité de traitement (1a, 9a) et des organes périphériques d'affichage (2, 31), d'introduction d'informations (3, 4, 5, 32), et de transmission (6, 34) pour accéder à un serveur (21) par l'intermédiaire d'un réseau public de transmission de données (20, 30), le dispositif de sécurisation (10, 29) comprenant des moyens de connexion pour se connecter à l'unité de traitement du terminal,
**caractérisé en ce qu'**il comprend :
- des moyens pour se connecter à au moins une partie des organes périphériques (2 à 6, 31, 32), de manière à intercepter tous les signaux transmis entre l'unité de traitement (1a, 9a) du terminal (1, 9) et les organes périphériques auxquels le dispositif de sécurisation est connecté,
- des moyens pour fonctionner soit dans un mode transparent, soit dans un mode sécurisé,
- des moyens pour retransmettre sans modification les signaux interceptés en mode transparent,
- des moyens pour afficher en mode sécurisé des informations d'une manière non modifiable, et
- des moyens pour chiffrer en mode sécurisé des informations confidentielles provenant des organes périphériques auxquels le dispositif de sécurisation est connecté.

2. Dispositif de sécurisation selon la revendication 1,
**caractérisé en ce que** les organes périphériques auxquels le dispositif de sécurisation est connecté comprennent au moins un organe de commande (3, 4, 5, 32), le dispositif de sécurisation comprenant des moyens pour analyser en mode transparent les signaux interceptés, provenant de l'organe de commande auquel le dispositif de sécurisation est connecté, pour y rechercher des ordres de passage en mode sécurisé, et pour retransmettre ces signaux à l'unité de traitement (1a, 9a) sans modification s'ils ne sont pas un ordre de passage en mode sécurisé.

3. Dispositif de sécurisation selon la revendication 2,
**caractérisé en ce qu'**il comprend un organe d'affichage (15') spécifique pour afficher des informations confidentielles d'une manière non modifiable.

4. Dispositif de sécurisation selon la revendication 1 ou 2,
**caractérisé en ce que** les organes périphériques auxquels le dispositif de sécurisation est connecté comprennent au moins un organe d'affichage (2, 31), le dispositif de sécurisation comprenant des moyens pour insérer en mode sécurisé dans les signaux interceptés, destinés à l'organe d'affichage (2, 31), des signaux d'affichage d'une fenêtre d'affichage sécurisé (15, 33) dans laquelle sont présentées d'une manière non modifiable des informations comprenant des informations provenant des organes de commande (3, 4, 5, 32) et/ou du réseau (20, 30), et pour retransmettre ces signaux à l'organe d'affichage,

5. Dispositif de sécurisation selon la revendication 4,
**caractérisé en ce qu'**il comprend un organe de commande (3') spécifique pour introduire des informations confidentielles.

6. Dispositif de sécurisation selon la revendication 4 ou 5,
**caractérisé en ce que** la fenêtre d'affichage sécurisé (15, 33) présente des dimensions et une position fixes sur l'écran d'affichage (2, 31).

7. Dispositif de sécurisation selon l'une des revendications 3 à 6,
**caractérisé en ce qu'**il comprend des moyens pour afficher dans la fenêtre d'affichage sécurisé (15, 15', 33), lors de son affichage, un message d'invitation de l'utilisateur à introduire un ordre de passage en mode sécurisé.

8. Dispositif de sécurisation selon l'une des revendications 1 à 7,
**caractérisé en ce qu'**il comprend des moyens pour se connecter entre le terminal (1, 9) et le réseau (20, 30), des moyens pour déchiffrer en mode sécurisé des informations confidentielles reçues du réseau, et des moyens pour afficher les informations confidentielles déchiffrées dans la fenêtre d'affichage sécurisé (15, 15', 33).

9. Dispositif de sécurisation selon l'une des revendications 1 à 8,
**caractérisé en ce qu'**il comprend des moyens de téléchargement pour recevoir d'une manière sécurisée un logiciel.

10. Dispositif de sécurisation selon l'une des revendications 1 à 9,
**caractérisé en ce qu'**il comprend des moyens de lecture (12, 26, 35, 37) d'une carte à puce (19, 19', 29, 39) dans laquelle sont stockées des informations confidentielles et des clés de chiffrement et de déchiffrement.

11. Dispositif de sécurisation selon la revendication 10,
**caractérisé en ce qu'**il comprend des moyens pour passer en mode sécurisé lorsqu'une carte à puce (39) est détectée par les moyens de lecture (26, 37).

12. Dispositif de sécurisation selon l'une des revendications 1 à 11,
**caractérisé en ce qu'**il comprend des moyens pour passer en mode sécurisé à la suite de l'actionnement d'une touche particulière d'un organe de commande (3, 32) auquel il est connecté.

13. Dispositif de sécurisation selon l'une des revendications 1 à 12,
**caractérisé en ce qu'**il comprend un bouton de commande (14) pour commander manuellement le passage en mode sécurisé.

14. Dispositif de sécurisation selon l'une des revendications 1 à 13,
**caractérisé en ce qu'**il comprend un voyant (16) pour indiquer à l'utilisateur s'il se trouve en mode sécurisé ou transparent.

15. Dispositif de sécurisation selon l'une des revendications 1 à 12,
**caractérisé en ce qu'**il comprend un logiciel intégré dans une puce électronique (29) insérée dans le terminal (9) de type terminal mobile, le logiciel comportant des moyens pour recevoir tous les signaux provenant d'organes de commande (32) du terminal, et tous les signaux destinés à l'écran d'affichage (31), et des moyens pour fonctionner soit dans le mode transparent, soit dans le mode sécurisé.

16. Dispositif de sécurisation selon la revendication 15,
**caractérisé en ce que** la puce électronique (29) est constituée par la carte SIM du terminal mobile (9).

17. Dispositif de sécurisation selon la revendication 15 ou 16,
**caractérisé en ce qu'**il comprend un logiciel installé dans le terminal (9), conçu pour adapter le système d'exploitation du terminal pour faire transiter par la puce électronique (29) tous les flux de données entrants dans le terminal, provenant soit d'un réseau mobile (30), soit des organes de commande (32) du terminal, et tous les flux sortants du terminal soit vers l'écran d'affichage (31), soit vers le réseau mobile (30).

18. Dispositif de sécurisation selon l'une des revendications 1 à 17,
**caractérisé en ce qu'**il comprend en outre des moyens pour recevoir un logiciel certifié, pour vérifier l'intégrité de ce logiciel et pour l'exécuter à la demande du terminal (1, 9) ou de l'utilisateur par l'intermédiaire d'un organe de commande (3, 4, 5, 32).

19. Dispositif de sécurisation selon la revendication 18,
**caractérisé en ce qu'**il comprend des moyens pour transmettre en mode sécurisé les signaux interceptés, provenant de l'organe de commande (3, 4, 5, 32), au logiciel en cours d'exécution.

20. Dispositif de sécurisation selon l'une des revendications 1 à 19,
**caractérisé en ce qu'**il comprend des moyens pour afficher en mode sécurisé à l'écran d'affichage (2, 31) un logo présentant deux formes indiquant si oui ou non l'utilisateur a lui-même activé le mode sécurisé.
